Europäisches Patentamt

European Patent Office

Office européen des brevets

(19)

(11) Veröffentlichungsnummer: **0 293 328**
A2

(12)

# EUROPÄISCHE PATENTANMELDUNG

(21) Anmeldenummer: 88810317.3

(22) Anmeldetag: 17.05.88

(51) Int. Cl.⁴: **B 60 J 11/00**

(30) Priorität: 25.05.87 CH 2009/87

(43) Veröffentlichungstag der Anmeldung:
30.11.88 Patentblatt 88/48

(84) Benannte Vertragsstaaten:
AT BE DE ES FR GB GR IT LU NL SE

(71) Anmelder: **Elmer, Herbert**
**Seegräben**
**CH-8607 Aathal (CH)**

(72) Erfinder: **Elmer, Herbert**
**Seegräben**
**CH-8607 Aathal (CH)**

(74) Vertreter: **Rebmann, John A.**
**Rebmann-Kupfer & Co., Patentanwaltsbureau**
**Augustiner-Glockengasse 18**
**CH-8022 Zürich 1 (CH)**

(54) Scheibenschutz-Vorrichtung an Fahrzeugen gegen atmosphärische Niederschläge, wie Schnee und Eis.

(57) Eine Schutzvorrichtung gegen atmosphärische Niederschläge an Fahrzeugen, mit an einem auf dem Fahrzeugdach (1') wegnehmbar befestigten Träger (3), an welchem sich wenigstens ein Spender (7) befindet, aus welchem ein schmiegsamer Bedeckungskörper (8) gezogen und auf die zu schützende Scheibe (2) gelegt werden kann. Der Träger ist zweckmässig durch ein Hohlprofil gebildet und wie ein Skiträger bügelförmig. Der Bedeckungskörper ist folienartig und durch eine schlitzartige Oeffnung (9) im Hohlprofil geführt.

FIG.7

FIG.2

FIG.4

FIG.9

EP 0 293 328 A2

**Beschreibung**

**Scheibenschutz-Vorrichtung an Fahrzeugen gegen atmosphärische Niederschläge, wie Schnee und Eis**

Beim Parkieren von Fahrzeugen, wie Automobilen, im Freien in der kalten Jahreszeit, werden die Scheiben mit Schnee, Eis und Tau beschlagen und machen vor dem Wegfahren eine umständliche Entfernung erforderlich. Auf die Fahrzeuge gelegte, zusammenlegbare Hüllen und Decken sind sehr wirksam, doch bereitet die Anbringung, die Entfernung und die Aufbewahrung in einer Unterkunft, wie Kofferraum, zeitraubende Unannehmlichkeiten. Das Legen von Papier unter die Scheibenwischer ist ebenfalls üblich, der Halt an der Scheibe bei schlechterem und windigem Wetter jedoch problematisch.

Gegenstand der vorliegenden Erfindung ist eine Scheibenschutz-Vorrichtung an Fahrzeugen gegen atmosphärische Niederschläge, wie Schnee und Eis. Derselben liegt die Aufgabe zugrunde, durch bereits am Fahrzeug verwendungsbereit befindliche Bedeckungsorgane gegen atmosphärische Niederschläge bei der Parkierung im Freien eine Bedeckung zu schaffen, welche sich rasch und leicht wieder entfernen lässt. Erfindungsgemäss wird diese Aufgabe durch die im Kennzeichen des Patentanspruches 1 definierten Merkmale gelöst. Weitere vorteilhafte Ausbildungen sind den abhängigen Patentansprüchen 2 bis 10 entnehmbar.

Auf der beiliegenden Zeichnung ist der Erfindungsgegenstand in zwei Ausführungsbeispielen dargestellt, und zwar zeigen :

Fig. 1 eine Querseitenansicht des Vorderteiles eines Automobiles mit der Schutzvorrichtung in einem ersten Ausführungsbeispiel,

Fig. 2 eine Frontseitenansicht desselben mit Spendern, den Bedeckungskörper ohne Blende,

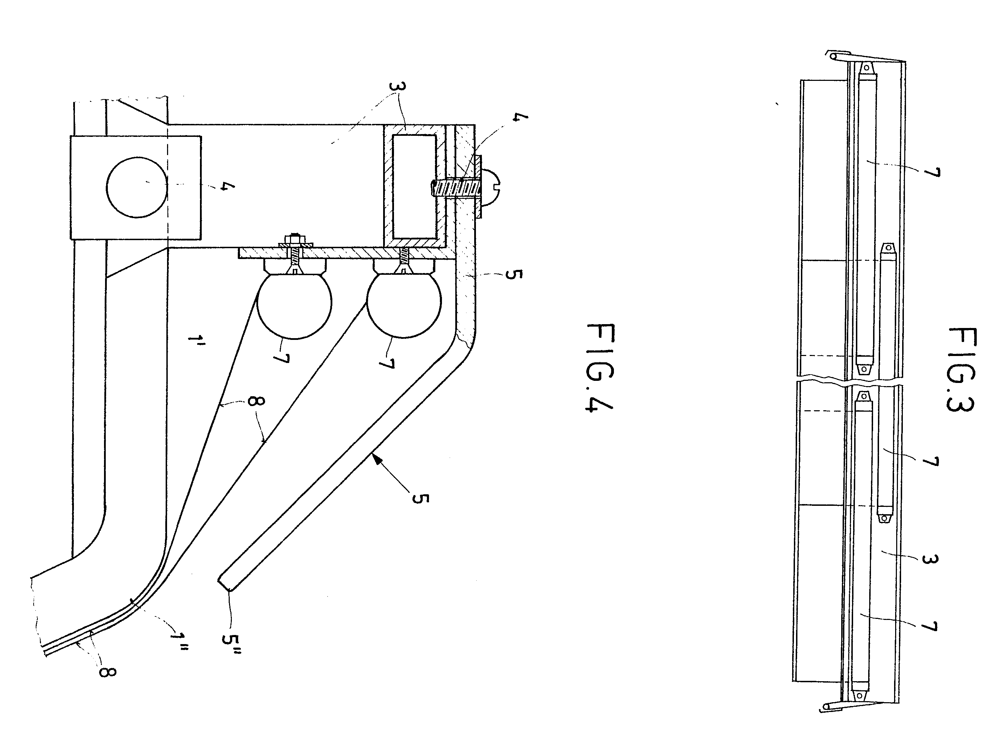

Fig. 3 eine ebensolche ohne Blende,

Fig. 4 einen senkrechten Schnitt nach der Linie IV-IV in Fig. 2 in grösserem Massstab,

Fig. 5 eine Querseitenansicht des Vorderteiles eines Automobiles in einem zweiten Ausführungsbeispiel,

Fig. 6 eine perspektivische Ansicht eines Automobiles mit teilweise ausgezogener Schutzvorrichtung,

Fig. 7 einen Schnitt nach der Linie VII-VII in Fig. 6 in grösserem Massstab,

Fig. 8 eine Frontseitenansicht in einem dritten Ausführungsbeispiel und

Fig. 9 einen Schnitt gemäss der Linie IX-IX in Fig. 8.

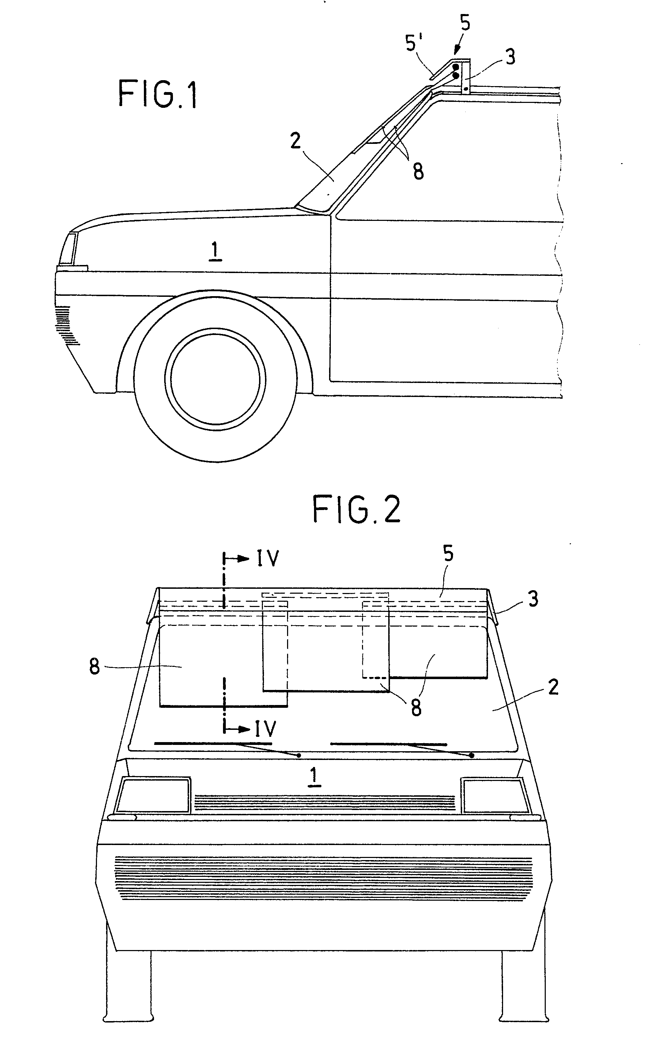

1 bezeichnet den Vorderteil eines Automobiles an dessen Dach 1' nahe der Frontscheibe 2 ein Träger 3 wegnehmbar befestigt ist. Der Träger 3 ist bügelförmig wie ein Skiträger und kann mit einem solchen kombiniert sein. Am Stegteil des Trägers 3 ist mittels Schrauben 4 eine schirmartige Blende 5 befestigt, die zweckmässig aus wasserfestem Werkstoff wie Verbund- oder Plexiglas besteht. Die Blende 5 hat winkliges Profil und deren freier Schenkel 5' verläuft nach vorn schräg abwärts gegen die Frontscheibe 2, ohne die letztere oder das Dach 1' zu berühren. Im Raum 6 zwischen dem Schenkel 5' der Blende 5 und dem Dach 1' befinden sich von oben und nach vorn geschützte Spender 7 mit je einem schmiegsamen, folien- oder papierartigen Bedeckungskörper 8. Bei breiten Automobilen sind drei Spender 7 an der Frontscheibe 2 zweckmässig, einer derselben befindet sich in der Mitte und zwei distanzierte nebeneinander im Abstand darunter, wie in Fig. 4 gezeigt. In letzterer ist der Verlauf der aus den Spendern 7 herausgezogenen Teile vom Bedeckungskörper 8 ersichtlich. In Distanz unter der Blende 5 verlaufen die Bedeckungs körper 8 über die Dachwölbung 1" zur Frontscheibe 2 und liegen dieser auf. Die stufenartige Anordnung der Spender 7, wie in Fig. 2 gezeigt, ist nicht notwendig. Wesentlich ist die Stellung auf der Sichthöhe des Automobilführers. Bei windigem Wetter ist es vorteilhaft die am Automobil befindlichen, herkömmlichen Scheibenwischer nach Stillsetzung der letzteren auf die in der Höhe derselben befindlichen Teile des Bedeckungskörpers 8, welcher der Scheibe 2 anliegt, zu setzen. Will man die Bedeckungskörper 8, welche der Scheibe anliegen wegnehmen, um die Sicht beim Wegfahren zu erhalten, so hat man einfach die Unterseite des Bedeckungskörpers 8 anzuheben, gegen die freie Kante 5" der Blende 5 zu bewegen, anzulegen und durch Schrägstellung abzureissen.

Es ist denkbar als Materialspender konventionelle, langgestreckte Schachteln, die geeignete, aufgerollte Bedeckungskörper 8 enthalten, zu verwenden. Der Träger 3 ist in einem solchen Fall zweckmässig mit einer entsprechenden Halterung auszurüsten.

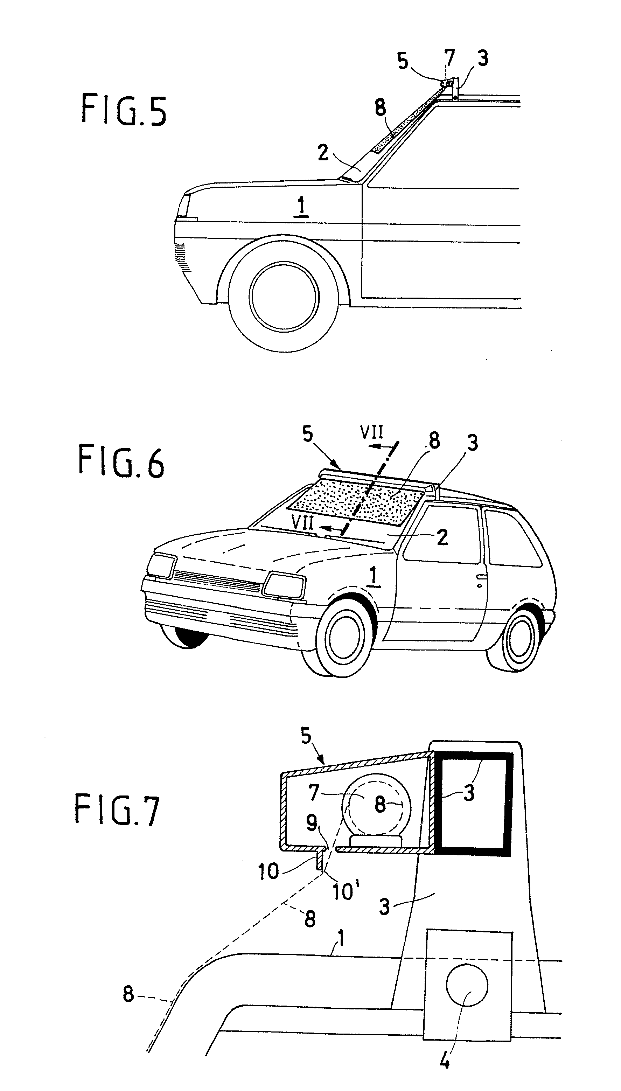

Nach dem zweiten Ausführungsbeispiel gemäss Fig. 5 bis 7 ist die Blende 5 durch ein winkliges Hohlprofil gebildet, welches sich nach vorn verjüngt. Im Hohlprofil lagert geschützt der Spender 7, welcher den Bedeckungskörper 8 enthält. Im Unterteil des Hohl.profiles ist eine schlitzartige Oeffnung 9 vorgesehen und im Bereich des vorderen Randes von letzterem ist an der Unterseite ein nach unten gerichtetes kantiges Anschlagstück 10 angeordnet,und der freien Kante 10' liegt der Bedeckungskörper 8 im ausgezogenen Zustand an. Das Anschlagstück 10 erleichtert mit seiner Kante 10' das Anreissen des Bedeckungskörpers 8 bei Schrägzugbewegung, zugleich verhindert dasselbe den Zutritt von Niederschlägen und Fremdstoffen in den Innenraum des Hohlprofiles und zum Spender 7. Das Hohlprofil verjüngt sich nach vorn, wodurch die Stabilität verstärkt und der Luftwiderstand reduziert wird. Die sonst mit Bezugszeichen belegten Teile haben den gleichen Sinn wie im ersten Ausführungsbeispiel.

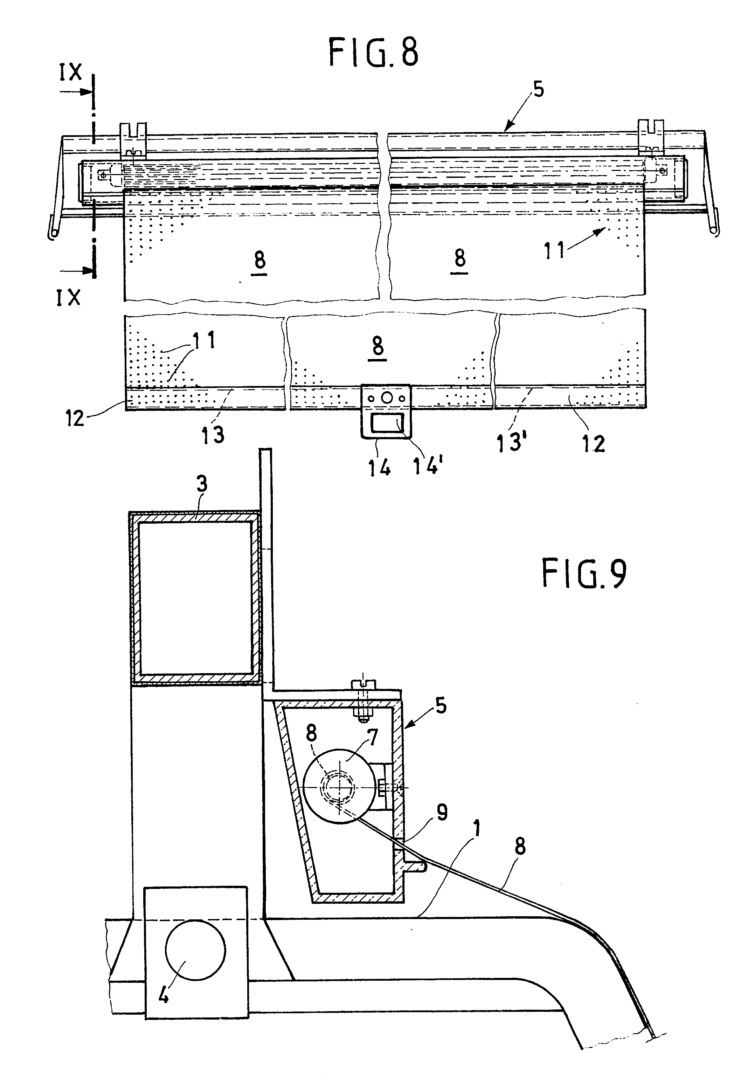

Nach dem dritten Ausführungsbeispiel gemäss Fig. 8 und 9 haben die mit Bezugszeichen belegten Teile ebenfalls den gleichen Sinn wie in den beiden vorangehenden Ausführungen. Der Bedeckungskörper 8 ist jalousieartig, hat eine grössere Dicke als konventionelle hauchdünne Folien, ist formbeständig, damit den im Gebrauch beim Ab- sowie Aufrollen auftretenden normalen Beanspruchungen gewachsen und somit zur Dauerverwendung geeignet. Ueber den Bedeckungskörper 8 verteilte Löcher 11 sind der Biegsamkeit des Bedeckungskörpers förderlich, ohne dieFormfestigkeit zu verlieren. Zugleich wird eine Luftzuführung an die Unterseite des Bedeckungskörpers ermöglicht, so dass die zufolge Luftmangels sich ergebende Haftung des letzteren an der Scheibe 2 vermieden und die Aufrollung desselben leicht als auch ohne Zerreissgefahr stattfinden kann. Es ist nur ein Teil der Löcher 11, die sich in engen Abständen nebeneinander befinden, gezeichnet. Der Spender 7 ist herkömmlicher Art, derselbe besitzt eine nicht besonders gezeichnete Ausbildung bestehend aus wenigstens einer Schraubenfeder, welche beim Abrollen des Bedeckungskörpers 8 gespannt wird und hernach das Aufrollen veranlassen kann.

Am aussenseitigen Ende des Bedeckungskörpers 8 steckt in einem Saum 12 eine Strebe 13 und es ist ein flexibles Haltestück 14 angeordnet, das ein Loch 14′ besitzt, in welches bei ausgezogenem Bedeckungskörper 8 ein nicht besonders gezeigter, im Bereich des unteren Teiles der Scheibe 2 festgelegter Haltehaken einzuführen bestimmt ist.

Die beschriebene Schutzvorrichtung ist selbstverständlich auch an der Rückseite des Fahrzeuges anbringbar.

**Patentansprüche**

1. Scheibenschutz-Vorrichtung an Fahrzeugen, insbesondere Automobilen, gegen atmosphärische Niederschläge, dadurch gekennzeichnet, dass im Bereich der zu schützenden Scheibe (2) an einem Träger (3) unter einer Blende (5) wenigstens ein Spender (7) vorgesehen ist, der einen schmiegsamen Bedeckungskörper (8) enthält, welcher über die Aussenseite der Scheibe (2) anzubringen und nach Belegung atmosphärischer Niederschläge zu entfernen bestimmt ist.

2. Schutzvorrichtung nach Anspruch 1, dadurch gekennzeichnet, dass der Träger (3) wegnehmbar am Dach (1) des Fahrzeuges angeordnet und die Blende (5) am Träger (3) befestigt ist.

3. Schutzvorrichtung nach den Ansprüchen 1 und 2, dadurch gekennzeichnet, dass der Träger (3) bügelförmig ist.

4. Schutzvorrichtung nach den Ansprüchen 1 bis 3, dadurch gekennzeichnet, dass die am Träger (3) vorgesehene Blende (5) von oben nach unten verlaufend gegen die Scheibe (2) gerichtet ist, und dass in einem Raum (6) zwischen dem Dach (1′) und der Blende (5) der Spender (7) angeordnet ist.

5. Schutzvorrichtung nach den Ansprüchen 1 bis 4, dadurch gekennzeichnet, dass der Bedeckungskörper (8) folienartig ist.

6. Schutzvorrichtung nach den Ansprüchen 1 bis 5, dadurch gekennzeichnet, dass mehrere Spender (7) mit je einem Bedeckungskörper (8) am Träger (3) angeordnet sind.

7. Schutzvorrichtung nach den Ansprüchen 1 bis 6, dadurch gekennzeichnet, dass der Träger (3) mit einem Skiträger kombiniert ist.

8. Schutzvorrichtung nach den Ansprüchen 1 bis 7, dadurch gekennzeichnet, dass die Blende (5) durch ein am Träger (3) befestigtes Hohlprofil gebildet ist, in welchem sich der Spender (7) befindet, der den ausziehbaren Bedeckungskörper (8) enthält, und dass im unteren Teil des Hohlprofiles eine schlitzartige Oeffnung (9) vorgesehen ist, durch welche der vom Spender (7) kommende, über die Scheibe (2) anzubringen bestimmte Bedeckungskörper (8) nach aussen geführt ist.

9. Schutzvorrichtung nach den Ansprüchen 1 und 8, dadurch gekennzeichnet, dass die schlitzartige Oeffnung (9) in der Querrichtung des Fahrzeuges verläuft und im Bereich des vorderen Randes der Oeffnung (9) ein nach unten gerichtetes kantiges Anschlagstück (10′) vorgesehen ist.

10. Schutzvorrichtung nach den Ansprüchen 1 und 8, dadurch gekennzeichnet, dass das Hohlprofil des Trägers (3) sich gegen die Vorderseite verjüngt.

11. Schutzvorrichtung nach den Ansprüchen 1 und 2, dadurch gekennzeichnet, dass der Bedeckungskörper (8) jalousieartig ist und durch eine mit feinen Löchern (11) versehene formfestere, den Dauergebrauch ermöglichende Bahn gebildet ist.

0293328

FIG.1

FIG.2

# FIG.3

# FIG.4

FIG.5

FIG.6

FIG.7

FIG.8

IX

IX

5

8    8    11

11    8

12    13    14  14'    13'    12

3

FIG.9

8    7    5

8    9    1    8

4